# EUROPÄISCHE PATENTSCHRIFT

(11) **EP 3 356 189 B1**
(45) Veröffentlichungstag und Bekanntmachung des Hinweises auf die Patenterteilung: **17.08.2022**
(21) Anmeldenummer: 16774662.7
(22) Anmeldetag: 29.09.2016
(51) Int. Cl.: B60R 21/264, F42B 3/04

(54) **GASGENERATOR, INSBESONDERE FÜR EIN FAHRZEUGINSASSENSCHUTZSYSTEM, FEDER ZUR ANORDNUNG IN EINEM GASGENERATOR, GASSACKMODUL UND FAHRZEUGINSASSENSCHUTZSYSTEM**
GAS GENERATOR, IN PARTICULAR FOR A VEHICLE OCCUPANT PROTECTION SYSTEM, SPRING FOR ARRANGING IN A GAS GENERATOR, AIRBAG MODULE, AND VEHICLE OCCUPANT PROTECTION SYSTEM
GÉNÉRATEUR DE GAZ, EN PARTICULIER POUR SYSTÈME DE PROTECTION DE PASSAGER DE VÉHICULE, RESSORT DESTINÉ À ÊTRE AGENCÉ DANS UN GÉNÉRATEUR DE GAZ, MODULE DE COUSSIN DE SÉCURITÉ GONFLABLE ET SYSTÈME DE PROTECTION DE PASSAGER DE VÉHICULE

(30) Priorität: 02.10.2015 DE 102015012703
(43) Veröffentlichungstag der Anmeldung: 08.08.2018
(73) Patentinhaber: ZF Airbag Germany GmbH, 84544 Aschau a. Inn (DE)
(72) Erfinder: ESAU, Anja, 84453 Mühldorf am Inn (DE); GREISSL, Anton, 83536 Gars (DE)
(74) Vertreter: ZF Patentabteilung - DIPS
(86) Internationale Anmeldenummer: PCT/EP2016/073268
(87) Internationale Veröffentlichungsnummer: WO 2017/055459

(56) Entgegenhaltungen:
- DE-A1-102007 037 325
- DE-A1-102013 110 810
- DE-U1- 29 818 778

## Beschreibung

Die Erfindung betrifft einen Gasgenerator nach dem Oberbegriff des Patentanspruchs 1. Ein solcher Gasgenerator, insbesondere für ein Fahrzeuginsassenschutzsystem, hat wenigstens einen Anzünder und eine ein pyrotechnisches Festtreibstoffbett enthaltende Brennkammer, wobei in der Brennkammer eine Feder angeordnet ist, die durch einen bei Aktivieren des Gasgenerators erzeugten Gasstrom in Richtung eines vom Anzünder entfernten Endes der Brennkammer ausdehnbar ist, wobei die Feder eine Mehrzahl von Federabschnitten mit unterschiedlich großen Au-βendurchmessern aufweist, wobei jeder Federabschnitt jeweils mehrere Federwindungen umfasst, und innerhalb eines Federabschnittes jeweils konstante Außendurchmesser und/oder Innendurchmesser vorliegen. Außerdem betrifft die Erfindung ein Gassackmodul sowie ein Fahrzeuginsassenschutzsystem.

Gasgeneratoren liefern beispielsweise Gas zum Befüllen eines Gassacks oder für den Antrieb eines Gurtstraffers. In beiden Fällen ist es wichtig, dass das erzeugte Gas schnell zur Verfügung steht. Ein beispielhafter Gasgenerator wird in DE 10 2007 037 325 A1 beschrieben. Dieser Gasgenerator umfasst einen Anzünder und eine Brennkammer mit einem Festtreibstoffbett. Im Inneren der Brennkammer ist ein verschiebliches Wandteil angeordnet, wobei sich dieses Wandteil beim Aktivieren des Gasgenerators innerhalb des Festtreibstoffbetts verschiebt und eine unzureichende Gasabfuhr verhindert. Aufgrund des verschieblichen Wandteils wird ein Gasführungskanal geschaffen. Das vom Anzünder ausströmende Gas gelangt somit durch den Gasführungskanal zum Festtreibstoffbett.

Ein Gasgenerator der eingangs genannten Art ist beispielsweise in der Schrift DE 10 2013 110 810 A1 gezeigt.

Die Aufgabe der vorliegenden Erfindung besteht darin, einen solchen Gasgenerator derart weiterzuentwickeln, dass zum einen ein schnelles Aufbrechen einer Anzünderkappe erfolgen kann und zum anderen das Anzündgas schnellstmöglich zum Treibstoffbett transportiert werden kann. Außerdem ist es Aufgabe der Erfindung ein Gassackmodul sowie ein Fahrzeuginsassenschutzsystem anzugeben.

Erfindungsgemäß wird diese Aufgabe im Hinblick auf den Gasgenerator, insbesondere für ein Fahrzeuginsassenschutzsystem, durch den Gegenstand des Patentanspruchs 1, im Hinblick auf das Gassackmodul durch den Gegenstand des Patentanspruchs 9 und im Hinblick auf das Fahrzeuginsassenschutzsystem durch den Gegenstand des Patentanspruchs 10 gelöst.

Vorteilhafte und zweckmäßige Ausgestaltungen des erfindungsgemäßen Gasgenerators bzw. der erfindungsgemäßen Feder sind in den Unteransprüchen angegeben.

Die Erfindung beruht demnach auf dem Gedanken, einen Gasgenerator, insbesondere für ein Fahrzeuginsassenschutzsystem, anzugeben, wobei der Gasgenerator wenigstens einen Anzünder und eine ein pyrotechnisches Festtreibstoffbett enthaltende Brennkammer umfasst. In der Brennkammer ist eine Feder angeordnet, die durch den bei Aktivieren des Gasgenerators erzeugten Gasstrom in Richtung eines vom Anzünder entfernten Endes der Brennkammer ausdehnbar ist, wobei die Feder eine Mehrzahl von Federabschnitten mit unterschiedlich großen Außendurchmessern aufweist, wobei jeder Federabschnitt jeweils mehrere Federwindungen umfasst, und innerhalb eines Federabschnittes jeweils konstante Außendurchmesser und/oder Innendurchmesser vorliegen.

Erfindungsgemäß ist ein vom Anzünder wegweisendes zweites Ende der Feder ein offenes Ausströmende.

Die Feder umfasst demnach eine Mehrzahl von Federabschnitten, wobei ein Federabschnitt dadurch gekennzeichnet ist, dass dieser mindestens zwei Federwindungen umfasst. Ein derartiger Federabschnitt mit mehreren Federwindungen weist einen durchgängig gleichen Außendurchmesser auf. In einer bevorzugten Ausführungsform der Erfindung umfasst die Feder drei, weiter bevorzugt vier, Federabschnitte mit unterschiedlich großen Außendurchmessern auf, wobei jeder Federabschnitt jeweils mehrere Federwindungen umfasst, wobei bevorzugt auch die jeweiligen Innendurchmesser der mindestens drei oder vier Federabschnitte unterschiedlich groß sind. Vorzugsweise besteht die Feder aus einem Federmaterial mit durchgängig gleicher Stärke bzw. mit durchgängig gleicher Materialdicke, so dass die Innendurchmesser der Federabschnitte im entsprechend gleichen Maße wie die Außendurchmesser der Federabschnitte unterschiedlich groß sind.

Die in der Brennkammer angeordnete Feder kann in einem Ausführungsbeispiel der Erfindung vollständig in der Brennkammer angeordnet sein. Vorzugsweise ist die Feder nicht vollständig in der Brennkammer angeordnet. Die Feder kann abschnittsweise in einem Bereich des Gasgenerators angeordnet sein, der dem Anzünder zugeordnet ist. Das erste, nämlich das anzünderseitige, Ende der Feder kann beispielsweise außerhalb der Brennkammer angeordnet sein. Die Feder ist in einem derartigen Beispiel mit dem zweiten Ende durch eine eine Durchgangsöffnung aufweisende Trennwand in die Brennkammer eingeführt.

Durch den bei Aktivieren des Gasgenerators erzeugten Gasstrom ist die Feder in Richtung eines vom Anzünder entfernten Endes der Brennkammer bewegbar bzw. ausdehnbar. Der Gasstrom kann in den Bereich des, insbesondere noch nicht entzündeten, pyrotechnischen Festtreibstoffbettbereichs gelangen. Die Feder definiert in ihrem Inneren, d.h. innerhalb der Federabschnitte bzw. in dem durch die Federwindungen gebildeten Innenraum, einen Gasführungskanal.

Durch die Bewegung bzw. Ausdehnung in Strömungsrichtung setzt die Feder der Gasströmung einen geringen Widerstand entgegen. Um ein schnelles Anzünden des Gases sicherzustellen, bewegt sich die Feder in das Festtreibstoffbett hinein und ermöglicht es, das pyrotechnische Festtreibstoffbett von einer anderen Seite aus anzuzünden als über die sich gleichmäßig hinwegbewegende Flammfront.

Der Gasführungskanal wird vorzugsweise im Inneren des durch die Feder gebildeten Raumes oder zwischen einer Innenseite der Brennkammerwand und der Au-βenseite der Feder gebildet.

Die Feder ist elastisch ausgeführt und kann sich folglich im pyrotechnischen Festtreibstoffbett ausdehnen. Die Feder kann beispielsweise an einem/dem ersten Ende fest mit einem feststehenden Teil des Gasgenerators verbunden sein. Die Feder wird dann durch die Strömung ausgedehnt, um den Gasführungskanal in das pyrotechnische Festtreibstoffbett einzutreiben.

Die Außendurchmesser der mindestens drei Federabschnitte werden von einem ersten anzünderseitigen Ende zu einem zweiten Ende der Feder hin kleiner. Mit anderen Worten nimmt das Maß der Außendurchmesser der einzelnen Federabschnitte vom anzünderseitigen Ende zum zweiten Ende hin ab.

Das erste anzünderseitige Ende kann auch als erstes axiales Ende bezeichnet werden. Das erste anzünderseitige bzw. axiale Ende ist im eingebauten Zustand dem Anzünder bzw. der Anzünderbaugruppe des Gasgenerators zugeordnet. Bei dem ersten axialen bzw. anzünderseitigen Ende handelt es sich um ein offenes Einströmende. Bei dem zweiten Ende der Feder handelt es sich um das Ende der Feder, das in der Brennkammer angeordnet ist und beim Aktivieren in Richtung des vom Anzünder entfernten Endes der Brennkammer bewegbar, insbesondere ausdehnbar, ist.

Erfindungsgemäß ist das zweite Ende der Feder ein offenes Ausströmende. Der Durchmesser des zweiten Endes der Feder ist vorzugsweise kleiner als der Durchmesser des ersten anzünderseitigen Endes der Feder. Aufgrund der Ausbildung eines offenen Einströmendes und eines offenen Ausströmendes kann Anzündergas vom Anzünder in die Brennkammer transportiert werden. Das Anzündergas kann aus dem offenen Ausströmende ausströmen, insbesondere in Richtung des pyrotechnischen Festtreibstoffbettes. Bei Aktivieren des Gasgenerators expandiert die Feder bzw. dehnt sich aus, sodass die Abstände zwischen einzelnen Federwindungen, insbesondere zwischen einzelnen Federwindungen des dritten Federabschnittes, vergrößert werden. Das Anzündergas kann durch die vergrößerten Abstände zwischen den Federwindungen ebenfalls in das Festtreibstoffbett strömen, wobei vorzugsweise der größte Anteil des Gasstroms des Anzündergases in radialer Richtung durch die vergrößerten Abstände zwischen den Federwindungen in das Treibstoffbett strömt.

Ein erster Federabschnitt ist vorzugsweise am anzünderseitigen Ende der Feder ausgebildet und weist den größten Außendurchmesser auf. Der erste Federabschnitt am anzünderseitigen Ende gleicht vorzugsweise axiale Toleranzen des Gasgeneratorgehäuses und/oder einer Anzünderbaugruppe bzw. des Gasgenerators aus. Die Toleranzen im Gasgenerator bzw. Gasgeneratorgehäuse können aufgrund von Materialtoleranzen bzw. im Rahmen des Herstellungsverfahrens auftreten.

Mit anderen Worten ist es möglich, dass der Abstand zwischen einem Anzündersockel bzw. einem Anzündergehäuse und einer Trennwand der Brennkammer unterschiedliche Größen aufweist. Mit Hilfe des ersten Federabschnitts der Feder werden vorzugsweise derart unterschiedliche Abstände ausgeglichen. Der erste Federabschnitt am anzünderseitigen Ende der Feder ist vorzugsweise zwischen einem Anzündersockel oder einem Anzündergehäuse und einer Trennwand der Brennkammer angeordnet. Die Trennwand weist eine Durchgangsöffnung auf, so dass die Feder in die Brennkammer eingeführt werden kann.

Der erste Federabschnitt kann zwischen dem Anzündersockel oder zwischen einer Anschlagseite des Anzündergehäuses und der Trennwand klemmend angeordnet sein. Des Weiteren ist es möglich, dass der erste Federabschnitt, insbesondere das anzünderseitige Ende, am Anzündersockel und/oder an einer Anschlagfläche des Anzündergehäuses befestigt ist. Beispielsweise kann der erste Federabschnitt und/oder das anzünderseitige Ende der Feder mit dem Anzündersockel und/oder dem Anzündergehäuse verklebt und/oder verschweißt sein.

Bei dem Anzünder kann es sich um einen konventionellen Anzünder handeln. D.h. auf zusätzliche Booster-Ladungen, insbesondere zusätzliche Booster-Kammern, kann im Rahmen des erfindungsgemäßen Gasgenerators verzichtet werden. Eine Hülse mit einer Anzündmischung, welche den Anzünder umgibt bzw. an diesen angrenzt, ist nicht notwendig. Auf eine derartige Booster-Ladung bzw. Booster-Kammer kann verzichtet werden, da die Feder aufgrund der erfindungsgemäßen Ausbildung innerhalb des Gasgenerators einen Gasführungskanal bildet und somit ähnlich schnell wie mit einer Booster-Ladung bzw. Booster-Kammer ein Ausströmen eines Anzündgases ermöglicht wird. Aufgrund des Verzichts auf eine Booster-Kammer bzw. Booster-Ladung können Materialien und Kosten eingespart werden.

In einer weiteren Ausführungsform der Erfindung ist zwischen dem anzünderseitigen Ende und dem zweiten Ende der Feder, insbesondere in axialer Richtung an den ersten Federabschnitt anschließend, ein zweiter Federabschnitt ausgebildet, der einen derartigen Innendurchmesser aufweist, dass der zweite Federabschnitt zumindest abschnittsweise den Anzünder umschließt und in axialer Richtung bewegbar ist. Mit anderen Worten ist der Innendurchmesser des zweiten Federabschnitts größer als der Außendurchmesser des Anzünders, insbesondere größer als der Außendurchmesser der Anzünderkappe.

Vorzugsweise schließt sich der zweite Federabschnitt an den ersten Federabschnitt an, wobei zwischen dem ersten Federabschnitt und dem zweiten Federabschnitt ein Übergangsabschnitt ausgebildet sein kann. Bei dem Übergangsabschnitt kann es sich beispielsweise um lediglich eine verbindende Federwindung handeln. Es ist auch möglich, dass der Übergangsabschnitt durch mehrere Federwindungen gebildet wird, wobei die Außendurchmesser dieser Federwindungen unterschiedlich sind. Als an den ersten Federabschnitt anschließend ist sowohl ein direkt anschließend als auch ein indirekt anschließend zu verstehen. An den ersten Federabschnitt anschließend bedeutet, dass vorzugsweise zwischen dem ersten Federabschnitt und dem zweiten Federabschnitt kein weiterer Federabschnitt mit mehreren Federwindungen, die gleiche Außendurchmesser aufweisen, ausgebildet ist.

Der Außendurchmesser des zweiten Federabschnitts ist geringer als der Au-βendurchmesser des ersten Federabschnitts. Der zweite Federabschnitt ist im eingebauten Zustand zumindest abschnittsweise in der Brennkammer des Gasgenerators befindlich. Vorzugsweise beginnt der zweite Federabschnitt mit der Durchgangsöffnung der Trennwand und ragt anschließend in die Brennkammer des Gasgenerators. Mit anderen Worten ist eine erste Windung des zweiten Federabschnitts in der Durchgangsöffnung bzw. im Bereich der Durchgangsöffnung der Trennwand ausgebildet.

Der zweite Federabschnitt ist in axialer Richtung derart länger als die Anzünderkappe des Anzünders, dass bei Aktivieren des Gasgenerators die Stirnseite der Anzünderkappe zerstörbar ist. Der zweite Federabschnitt der Feder umschließt den Anzünder, insbesondere die Anzünderkappe, und ist derart groß gestaltet, dass bei Aktivieren des Anzünders ein bestimmungsgemäßes Aufbrechen der Stirnseite der Anzünderkappe möglich ist. Die Anzündgase bzw. Anzündpartikel des Anzünders können folglich in das umliegende und in axialer Richtung liegende pyrotechnische Festtreibstoffbett verteilt werden.

Die axiale Länge des zweiten Federabschnitts kann das 1,5- bis 3,0-fache, insbesondere das 1,8- bis 2,5-fache, insbesondere das 1,9- bis 2,3-fache, der axialen Länge der Anzünderkappe des Anzünders betragen. Mit Hilfe der angegebenen axialen Längen kann die Stirnseite der Anzünderkappe aufgrund des gebildeten Freiraums zwischen der Stirnseite und einem weiteren Federabschnitt der Feder bestmöglich bei Aktivieren des Gasgenerators aufbrechen. Als ideales Aufbrechen ist ein sogenanntes blumenförmiges Aufplatzen bzw. Aufbrechen zu verstehen. Beispielsweise kann hierbei die Stirnseite der Anzünderbaugruppe derart aufbrechen, dass laschenförmige bzw. segmentförmige Teilbereiche dieser Stirnseite in axialer Richtung ausgebildet werden, derart, dass diese innerhalb der axialen Erstreckung des zweiten Federabschnitts ausreichend Raum haben.

Am zweiten Ende der Feder, insbesondere in axialer Richtung an den zweiten Federabschnitt anschließend, kann ein dritter Federabschnitt ausgebildet sein. Dieser dritte Federabschnitt kann bei Aktivieren des Gasgenerators in den noch nicht entzündeten Bereich des Festtreibstoffbetts bewegbar sein und definiert in seinem Inneren einen in das Festtreibstoffbett hineinreichenden Gasführungskanal. Das zweite Ende der Feder ist vorzugsweise das vom Anzünder wegweisende Ende der Feder.

Vorzugsweise ist der dritte Federabschnitt als in axialer Richtung abschließender Federabschnitt der Feder ausgebildet. Zwischen dem zweiten Federabschnitt und dem dritten Federabschnitt kann ein Übergangsabschnitt ausgebildet sein. Bei dem Übergangsabschnitt handelt es sich beispielsweise um eine einzelne Windung der Feder. Bei dem Übergangsabschnitt kann es sich mit anderen Worten um lediglich eine verbindende Federwindung handeln. Es ist auch möglich, dass der Übergangsabschnitt durch mehrere Federwindungen gebildet wird, wobei die Außendurchmesser dieser Federwindungen unterschiedlich sind. Als an den zweiten Federabschnitt anschließend ist sowohl ein direkt anschließend als auch ein indirekt anschließend zu verstehen. An den zweiten Federabschnitt anschließend bedeutet, dass vorzugsweise zwischen dem zweiten Federabschnitt und dem dritten Federabschnitt kein weiterer Federabschnitt mit mehreren Federwindungen, die gleiche Außendurchmesser aufweisen, ausgebildet ist.

Der Übergangsbereich zwischen dem zweiten Federabschnitt und dem dritten Federabschnitt kann eine Absatzfläche bilden. Eine Absatzfläche ist vorzugsweise vom Anzünder, insbesondere von der Stirnseite der Anzünderkappe, beabstandet ausgebildet. Der Abstand wird aufgrund der axialen Länge des zweiten Federabschnitts gebildet.

Der dritte Federabschnitt ist vorzugsweise der Abschnitt der Feder mit dem geringsten Außendurchmesser. Auch der Innendurchmesser des dritten Federabschnitts kann der geringste Innendurchmesser der Feder sein. Der dritte Federabschnitt ist vorzugsweise derart klein ausgelegt, dass ein großer Anteil der Brennkammer mit einem pyrotechnischen Festtreibstoffbett befüllt ist bzw. befüllbar ist. Allerdings ist der dritte Federabschnitt der Feder auch derart groß auszulegen, dass ein effektiver Anzündkanal aufgrund der Feder gebildet werden kann und eine Gasströmung in das pyrotechnische Festtreibstoffbett bei Aktivieren des Gasgenerators erzeugt werden kann.

Im Ruhezustand des Gasgenerators bzw. im nicht aktivierten Zustand des Gasgenerators befindet sich im Inneren der Feder, insbesondere im Inneren des ersten und/oder des zweiten und/oder des dritten Federabschnitts keine Festtreibstoffladung. Mit anderen Worten befindet sich kein Treibstoffkörper innerhalb des Volumens, das von der Feder gebildet bzw. umschlossen ist.

In einer Ausführungsform der Erfindung kann im pyrotechnischen Festtreibstoffbett mindestens eine Frühzündtablette befindlich sein. Das pyrotechnische Festtreibstoffbett kann somit mindestens eine Frühzündtablette umfassen. Im sogenannten "Bonfire"-Fall kann somit eine frühzeitige Aktivierung des Gasgenerators erfolgen. Der "Bonfire"-Fall betrifft das Auslösen des Gasgenerators nur durch einen externen Temperaturanstieg. Ein derartiger externer Temperaturanstieg kann beispielsweise bei einem Fahrzeugbrand vorliegen.

Mindestens eine Frühzündtablette kann im Bereich der Anzünderkappe, insbesondere mit Kontakt zu einem Abschnitt des Gasgeneratoraußengehäuses, angeordnet sein. Bei einem Kontakt zum Gasgeneratoraußengehäuse findet ein vorzugsweise guter Wärmeübergang zwischen den externen Temperaturen und dem Gasgeneratorinneren statt. Sofern die Frühzündtablette in der Nähe der Anzünderkappe bzw. an der Anzünderkappe anliegend angeordnet ist, kann ein frühzeitiges Aktivieren des Gasgenerators bewirkt werden.

Zusammenfassend handelt es sich bei dem erfindungsgemäßen Gasgenerator um einen konstruktiv einfach ausgebildeten Gasgenerator, wobei mit konstruktiv einfachen Hilfsmitteln axiale Toleranzen im Bereich des Gasgeneratorgehäuses ausgeglichen werden können und zugleich eine schnelle Zündung des Gasgenerators sowie eine schnelle Entfaltungszeit eines Gassacks ermöglicht wird.

Hinsichtlich eines Gassackmoduls wird die Aufgabe durch die Merkmale des Patentanspruches 9 gelöst. Ein solches erfindungsgemäßes Gassackmodul umfasst einen erfindungsgemäßen Gasgenerator.

Das Gassackmodul umfasst neben einem erfindungsgemäßen Gasgenerator einen Gassack, der mit Hilfe eines, insbesondere mit Hilfe des erfindungsgemäßen, Gasgenerators im Funktionsfall aufgeblasen werden kann.

Hinsichtlich eines Fahrzeuginsassenschutzsystems wird die Aufgabe durch die Merkmale des Anspruchs 10 gelöst. Demnach weist ein Fahrzeuginsassenschutzsystem einen erfindungsgemäßen Gasgenerator oder ein erfindungsgemäßes Gassackmodul auf. Es ergeben sich ähnliche Vorteile, wie diese bereits im Zusammenhang mit dem erfindungsgemäßen Gasgenerator erläutert wurden.

Die Erfindung wird im Folgenden anhand von Ausführungsbeispielen unter Bezugnahme auf die beigefügten, schematischen Zeichnungen näher erläutert.

Darin zeigen:
- Fig. 1:: eine Schnittdarstellung eines erfindungsgemäßen Gasgenerators mit einer Feder; und
- Fig. 2:: eine Schnittdarstellung einer Feder.

Im Folgenden werden für gleiche und gleichwirkende Teile gleiche Bezugsziffern verwendet.

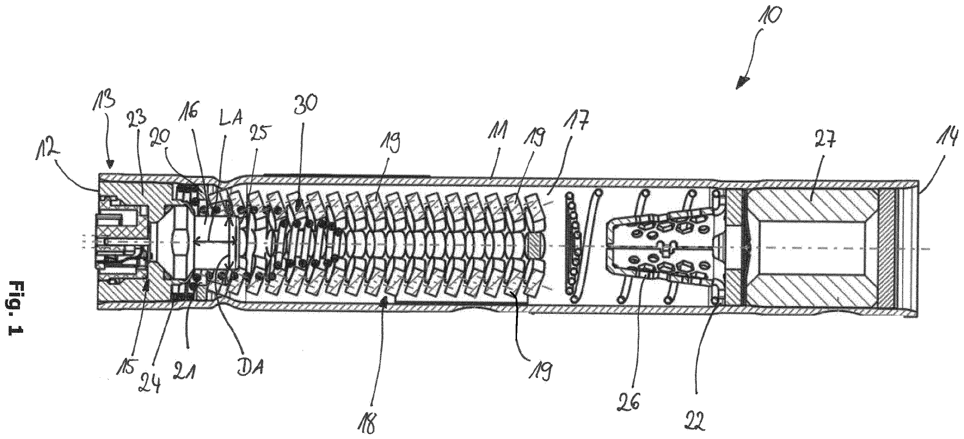

Fig. 1 zeigt einen Gasgenerator 10 mit einem langgestreckten, zylindrischen Gasgeneratorgehäuse 11. An dem ersten axialen Ende 12 des Gasgeneratorgehäuses 11 ist eine Anzünderbaugruppe 13 vorgesehen. Am zweiten axialen Ende 14 des Gasgeneratorgehäuses 11 strömt das im Gasgenerator 10 erzeugte Gas aus dem Gasgenerator 10 und beispielsweise in einen Gassack (nicht dargestellt). Das Gasgeneratorgehäuse 11 bildet das Außengehäuse des Gasgenerators 10.

Die Anzünderbaugruppe 13 umfasst einen Anzünder 15 mit einer Anzünderkappe 16. In der ebenfalls dargestellten Brennkammer 17 befindet sich ein pyrotechnisches Festtreibstoffbett 18. Dargestellt sind die einzelnen tablettenförmigen Treibstoffkörper 19. Das pyrotechnische Treibstoffbett 18 besteht folglich aus einer Schüttung einzelner Treibstoffkörper 19. Die Anzünderbaugruppe 13 wird über eine scheibenartige Trennwand 20 abschnittsweise von der angrenzenden Brennkammer 17 getrennt. In einer nicht dargestellten Ausführungsform kann auf die Trennwand 20 auch verzichtet werden. Die Brennkammer 17 besitzt eine Gesamtlänge, die wenigstens dreimal so groß ist wie die größte Erstreckung im Querschnitt.

Fig. 1 zeigt einen nicht aktivierten Zustand des Gasgenerators 10. Zumindest abschnittsweise ist in der Brennkammer 17 eine Feder 30 angeordnet, die durch den bei Aktivieren des Gasgenerators 10 erzeugten Gasstrom in Richtung des vom Anzünder 15 entfernten Endes 22 der Brennkammer 17 ausdehnbar ist.

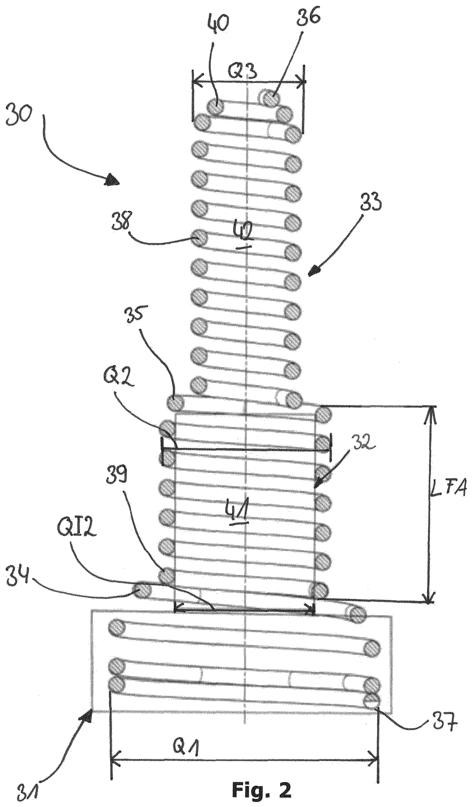

Die Feder 30 (siehe hierzu Fig. 2) umfasst drei Federabschnitte 31, 32, 33 mit unterschiedlich großen Außendurchmessern Q1, Q2 und Q3. Die Außendurchmesser Q1, Q2 und Q3 der Federabschnitte 31, 32, 33 nehmen von dem anzünderseitigen Ende 37 zu dem zweiten Ende 36 der Feder 30 hin ab. Der Außendurchmesser Q1 des ersten Federabschnittes 31 ist größer als der Außendurchmesser Q2 des zweiten Federabschnittes 32. Der Außendurchmesser Q2 des zweiten Federabschnittes 32 ist größer als der Außendurchmesser Q3 des dritten Federabschnitts 33.

Der erste Federabschnitt 31 am anzünderseitigen Ende 37 der Feder 30 weist den größten Außendurchmesser Q1 auf. Im eingebauten Zustand (siehe Fig. 1) gleicht dieser Federabschnitt 31 axiale Toleranzen des Gasgeneratorgehäuses 11 aus. Der erste Federabschnitt 31 am anzünderseitigen Ende 37 der Feder 30 ist zwischen dem Anzündersockel 23 und der Trennwand 20 angeordnet. Insbesondere der Abstand zwischen der Anschlagseite 24 des Anzündersockels 23 und der Trennwand 20 kann herstellungsbedingt variieren. Diese variablen Abstände können aufgrund des ersten Federabschnitts 31 ausgeglichen werden.

Der erste Federabschnitt 31, der zweite Federabschnitt 32 sowie der dritte Federabschnitt 33 weisen jeweils mehrere Federwindungen auf. In den jeweiligen Federabschnitten 31, 32, 33 ist jeweils ein einheitlicher Außendurchmesser Q1, Q2, Q3 ausgebildet. Da die Feder 30 aus einem durchgängig gleich dicken Federdraht 38 gebildet ist, verhält sich der Zustand des jeweiligen Innendurchmessers des ersten Federabschnitts 31, des zweiten Federabschnitts 32 sowie des dritten Federabschnitts 33 korrespondierend zum jeweiligen Außendurchmesser Q1, Q2 und Q3.

Zwischen dem anzünderseitigen Ende 37 und dem zweiten Ende 36 der Feder 30 ist der zweite Federabschnitt 32 ausgebildet, der einen derartigen Innendurchmesser QI2 aufweist, dass der zweite Federabschnitt 32 abschnittsweise den Anzünder 15, insbesondere die Anzünderkappe 16, umschließt und in axialer Richtung, d.h. in Richtung des ersten axialen Endes 12 des Gasgeneratorgehäuses 11 sowie in Richtung des zweiten axialen Endes 14 des Gasgeneratorgehäuses 11, bewegbar ist. Der Innendurchmesser QI2 des zweiten Federabschnitts 32 ist somit größer als der Außendurchmesser DA der Anzünderkappe 16.

Außerdem ist der zweite Federabschnitt 32 in axialer Richtung derart länger als die Anzünderkappe 16 des Anzünders 15, dass bei Aktivieren des Gasgenerators 10 die Stirnseite 25 der Anzünderkappe 16 zerstörbar ist. Beim Aktivieren des Gasgenerators 10 kann demnach die Stirnseite 25 aufbrechen und wird nicht von Federwindungen des zweiten Federabschnitts 32 gestaucht bzw. verklemmt. Die Stirnseite 25 kann vorzugsweise blumenförmig aufplatzen. Das Anzündgas kann vom Anzünder 15 in Richtung des Endes 22 der Brennkammer 17 strömen.

Die axiale Länge LFA des zweiten Federabschnittes 32 beträgt insbesondere das 1,9- bis 2,3-fache der axialen Länge LA der Anzünderkappe 16 des Anzünders 15. Der zweite Federabschnitt 32 ist in axialer Richtung an den ersten Federabschnitt 31 anschließend ausgebildet. Zwischen dem zweiten Federabschnitt 32 und dem ersten Federabschnitt 31 ist lediglich ein Übergangsabschnitt 34 ausgebildet, der aus einer Windung gebildet ist.

Die erste Windung 39 des zweiten Federabschnitts 32 ist im eingebauten Zustand in der Durchgangsöffnung 21 der Trennwand 20 ausgebildet. Mit Hilfe der Durchgangsöffnung 21 kann sowohl die Feder 30 als auch die Anzünderkappe 16 abschnittsweise in die Brennkammer 17 eingeführt werden.

Am zweiten Ende 36 der Feder 30 ist der dritte Federabschnitt 33 ausgebildet. Bei Aktiveren des Gasgenerators 10 ist insbesondere dieser dritte Federabschnitt 33 in den noch nicht entzündeten Bereich des pyrotechnischen Festtreibstoffbetts 18 bewegbar.Das Innere 42 des dritten Federabschnitts 33, d.h. das durch den dritten Federabschnitt 33 gebildete Innenvolumen der Feder, definiert einen in das pyrotechnische Festtreibstoffbett 18 hinreichenden Gasführungskanal. Somit kann das vom Anzünder 15 erzeugte Anzündgas gleichmäßig und schnell in das pyrotechnische Festtreibstoffbett 18 gelangen. Das Ende 36 der Feder 30 wird durch eine abschließende Federwindung 40 gebildet. Diese abschließende Federwindung 40 kann einen kleineren Außendurchmesser als der Außendurchmesser Q3 des dritten Federabschnitts 33 aufweisen.

Der dritte Federabschnitt 33 ist in axialer Richtung an den zweiten Federabschnitt 32 anschließend ausgebildet. Zwischen dem zweiten Federabschnitt 32 und dem dritten Federabschnitt 33 ist lediglich ein Übergangsabschnitt 35, der aus einer Federwindung gebildet ist, ausgebildet.

Zwischen dem Übergangsabschnitt 35 und der Stirnseite 25 der Anzünderkappe 16 ist ein hinreichender Abstand ausgebildet, so dass die Stirnseite 25, wie bereits erwähnt, bei Aktivieren des Gasgenerators 10 zerstörbar ist.

Bei Aktivieren des Gasgenerators 10 bewegt sich insbesondere der dritte Federabschnitt 33 innerhalb des pyrotechnischen Festtreibstoffbetts 18 nach rechts. Der dritte Federabschnitt 33 wandert sozusagen mit der Druckwelle mit und bahnt sich seinen Weg durch das pyrotechnische Festtreibstoffbett 18. Die gerichtete Führung der expandierenden bzw. bewegten Feder 30 erfolgt unter anderem aufgrund der Trennwand 20 und der darin ausgebildeten Durchgangsöffnung 21. Im Inneren 41 der Feder 30, d.h. in dem durch die Feder 30 gebildeten Innenvolumen befinden sich keine Treibstoffkörper 19.

Das gebildete Gas verlässt durch das Brennkammersieb 26 die Brennkammer 17. Es ist möglich, dass das erzeugte Gas nach dem Austritt aus dem Brennkammersieb 26 ein Filterpaket 27 durchströmt.

### Bezugszeichenliste

- 10: Gasgenerator
- 11: Gasgeneratorgehäuse
- 12: erstes axiales Ende
- 13: Anzünderbaugruppe
- 14: zweites axiales Ende
- 15: Anzünder
- 16: Anzünderkappe
- 17: Brennkammer
- 18: pyrotechnisches Festtreibstoffbett
- 19: Treibstoffkörper
- 20: Trennwand
- 21: Durchgangsöffnung
- 22: Ende Brennkammer
- 23: Anzündersockel
- 24: Anschlagseite
- 25: Stirnseite Anzünderkappe
- 26: Brennkammersieb
- 27: Filterpaket
- 30: Feder
- 31: erster Federabschnitt
- 32: zweiter Federabschnitt
- 33: dritter Federabschnitt
- 34: Übergangsabschnitt
- 35: Übergangsabschnitt
- 36: zweites Ende
- 37: anzünderseitiges Ende
- 38: Federdraht
- 39: erste Federwindung
- 40: abschließende Federwindung
- 41: Federinneres
- 42: Federinneres dritter Federabschnitt
- Q1: Außendurchmesser erster Federabschnitt
- Q2: Außendurchmesser zweiter Federabschnitt
- Q3: Außendurchmesser dritter Federabschnitt
- QI2: Innendurchmesser zweiter Federabschnitt
- DA: Außendurchmesser Anzünderkappe
- LA: Länge Anzünderkappe
- LFA: Länge zweiter Federabschnitt

## Patentansprüche

1. Gasgenerator (10), insbesondere für ein Fahrzeuginsassenschutzsystem, mit wenigstens einem Anzünder (15) und einer ein pyrotechnisches Festtreibstoffbett (18) enthaltenden Brennkammer (17), wobei in der Brennkammer (17) eine Feder (30) angeordnet ist, die durch einen bei Aktivieren des Gasgenerators (10) erzeugten Gasstrom in Richtung eines vom Anzünder (15) entfernten Endes (22) der Brennkammer (17) ausdehnbar ist, wobei die Feder (30) eine Mehrzahl von Federabschnitten (31, 32, 33) mit unterschiedlich großen Außendurchmessern (Q1, Q2, Q3) aufweist, wobei jeder Federabschnitt (31, 32, 33) jeweils mehrere Federwindungen umfasst, und innerhalb eines Federabschnittes (31, 32, 33) jeweils konstante Außendurchmesser und/oder Innendurchmesser vorliegen,
**dadurch gekennzeichnet, dass** ein vom Anzünder (15) wegweisendes zweites Ende (36) der Feder (30) ein offenes Ausströmende ist.

2. Gasgenerator (10) nach Anspruch 1,
**dadurch gekennzeichnet, dass** die Feder (30) drei oder vier Federabschnitte (31, 32, 33) mit unterschiedlich großen Außendurchmessern (Q1, Q2, Q3) aufweist, wobei jeder Federabschnitt (31, 32, 33) jeweils mehrere Federwindungen umfasst.

3. Gasgenerator (10) nach Anspruch 1 oder 2,
**dadurch gekennzeichnet, dass**
die Außendurchmesser (Q1, Q2, Q3) der Federabschnitte (31, 32, 33) von einem ersten anzünderseitigen Ende (37) zu einem zweiten Ende (36) der Feder hin kleiner werden, und/oder, dass ein erster Federabschnitt (31) am anzünderseitigen Ende (37) der Feder den größten Außendurchmesser (Q1) aufweist.

4. Gasgenerator (10) nach einem der Ansprüche 1 bis 3,
**dadurch gekennzeichnet, dass**
ein/der erste(r) Federabschnitt (31) am anzünderseitigen Ende (37) der Feder axiale Toleranzen des Gasgeneratorgehäuses (11) und/oder einer Anzünderbaugruppe (13) ausgleicht.

5. Gasgenerator (10) nach einem der Ansprüche 1 bis 4,
**dadurch gekennzeichnet, dass**
ein erster Federabschnitt (31) am anzünderseitigen Ende (37) der Feder zwischen einem Anzündersockel oder Anzündergehäuse und einer Trennwand (20) der Brennkammer (17) angeordnet ist.

6. Gasgenerator (10) nach einem der Ansprüche 1 bis 5,
**dadurch gekennzeichnet, dass**
zwischen dem anzünderseitigen Ende (37) und dem zweiten Ende (36) der Feder, insbesondere in axialer Richtung an den ersten Federabschnitt (31) anschließend, ein zweiter Federabschnitt (32) ausgebildet ist, der einen derartigen Innendurchmesser (QI2) aufweist, dass der zweite Federabschnitt (32) zumindest abschnittsweise den Anzünder (15), insbesondere die Anzünderkappe (16), umschließt und in axialer Richtung bewegbar ist.

7. Gasgenerator (10) nach Anspruch 6,
**dadurch gekennzeichnet, dass**
der zweite Federabschnitt (32) in axialer Richtung derart länger als die Anzünderkappe (16) des Anzünders (15) ist, dass bei Aktivieren des Gasgenerators (10) die Stirnseite (25) der Anzünderkappe (16) zerstörbar ist, und/oder, dass die axiale Länge (LFA) des zweiten Federabschnitts das 1,5 - 3,0-fache, insbesondere das 1,8 - 2,5-fache, insbesondere das 1,9 - 2,3-fache, der axialen Länge der Anzünderkappe (16) des Anzünders (15) beträgt.

8. Gasgenerator (10) nach einem der Ansprüche 1 bis 7,
**dadurch gekennzeichnet, dass**
am zweiten Ende (36) der Feder, insbesondere in axialer Richtung an den zweiten Federabschnitt (32) anschließend, ein dritter Federabschnitt (33) ausgebildet ist, der bei Aktivieren des Gasgenerators (10) in den noch nicht entzündeten Bereich des Festtreibstoffbetts (18) bewegbar ist und in seinem Inneren (42) einen in das Festtreibstoffbett (18) hineinreichenden Gasführungskanal definiert, und/oder dass das Festtreibstoffbett (18) mindestens eine Frühzündtablette umfasst, wobei vorzugsweise die Frühzündtablette im Bereich der Anzünderkappe (16), insbesondere mit Kontakt zu einem Abschnitt des Gasgeneratoraußengehäuses (11), angeordnet ist.

9. Gassackmodul mit einem Gasgenerator (10) nach einem der Ansprüche 1 bis 8.

10. Fahrzeuginsassenschutzsystem mit einem Gasgenerator (10) nach einem der Ansprüche 1 bis 8 oder mit einem Gassackmodul nach Anspruch 9.

## Claims

1. A gas generator (10), in particular for a vehicle occupant protection system, comprising at least an igniter (15) and a combustion chamber (17) containing a pyrotechnic solid fuel bed (18), wherein a spring (30) is arranged in the combustion chamber (17) which spring can be elongated in the direction of an end (22) of the combustion chamber (17) remote from the igniter (15) by gas flow produced when the gas generator (10) is activated, wherein
the spring (30) has a plurality of spring segments (31, 32, 33) having outside diameters of different sizes (Q1, Q2, Q3), wherein each spring segment (31, 32, 33) has a plurality of spring turns and each spring segment (31, 32, 33) has a constant outside diameter and/or inside diameter,
**characterized in that** a second end (36) of the spring (30) facing away from the igniter (15) is an open outflow end.

2. The gas generator (10) according to claim 1,
**characterized in that** the spring (30) has three or four spring segments (31, 32, 33) with outside diameters of different sizes (Q1, Q2, Q3), wherein each spring segment (31, 32, 33) has a plurality of spring turns.

3. The gas generator (10) according to claim 1 or 2,
**characterized in that**
the outside diameters (Q1, Q2, Q3) of the spring segments (31, 32, 33) decrease from a first igniter-side end (37) toward a second end (36) of the spring and/or **in that** a first spring segment (31) has the largest outside diameter (Q1) at the igniter-side end (37) of the spring.

4. The gas generator (10) according to any one of the claims 1 to 3,
**characterized in that**
a/the first spring segment (31) compensates axial tolerances of the gas generator housing (11) and/or of an igniter subassembly (13) at the igniter-side end (37) of the spring.

5. The gas generator (10) according to any one of the claims 1 to 4,
**characterized in that**
a first spring segment (31) is arranged at the igniter-side end (37) of the spring between an igniter base or igniter casing and a partition (20) of the combustion chamber (17).

6. The gas generator (10) according to any one of the claims 1 to 5,
**characterized in that**
between the igniter-side end (37) and the second end (36) of the spring, in particular in axial direction adjacent to the first spring segment (31) a second spring segment is configured (32) which has such inside diameter (QI2) that the second spring segment (32) at least in sections encloses the igniter (15), especially the igniter cap (16), and is movable in the axial direction.

7. The gas generator (10) according to claim 6,
**characterized in that**
the second spring segment (32) is longer in the axial direction than the igniter cap (16) of the igniter (15) so that upon activation of the gas generator (10) the end face (25) of the igniter cap (16) can be destroyed, and/or **in that** the axial length (LFA) of the second spring segment is 1.5 to 3.0 times, especially 1.8 to 2.5 times, especially 1.9 to 2.3 times the axial length of the igniter cap (16) of the igniter (15).

8. The gas generator (10) according to any one of the claims 1 to 7,
**characterized in that**
at the second end (36) of the spring, in particular adjacent to the second spring segment (32) in the axial direction, a third spring segment (33) is configured which, when the gas generator (10) is activated, is movable into the unignited area of the solid fuel bed (18) and in its interior (42) defines a gas containing passage reaching into the solid fuel bed (18), and/or **in that** the solid fuel bed (18) comprises at least one advance ignition pellet, wherein preferably the advance ignition pellet is arranged in the area of the igniter cap (16), in particular contacting a segment of the external gas generator housing (11).

9. An airbag module comprising a gas generator (10) according to any one of the claims 1 to 8.

10. A vehicle occupant protection system comprising a gas generator (10) according to any one of the claims 1 to 8 or comprising an airbag module according to claim 9.

## Revendications

1. Générateur de gaz (10), en particulier pour un système de protection des occupants d'un véhicule, avec au moins un allumeur (15) et une chambre de combustion (17) contenant un lit de propergol solide pyrotechnique (18),pour lequel un ressort (30) est disposé dans la chambre de combustion (17), lequel peut être dilaté par un flux de gaz généré lors de l'activation du générateur de gaz (10) en direction d'une extrémité (22) de la chambre de combustion (17) éloignée de l'allumeur (15), pour lequel
le ressort (30) présente une pluralité de sections de ressort (31, 32, 33) avec des diamètres extérieurs (Q1, Q2, Q3) de tailles différentes, pour lequel chaque section de ressort (31, 32, 33) entoure respectivement plusieurs spires de ressort, et à l'intérieur d'une section de ressort (31, 32, 33) se trouvent respectivement des diamètres extérieurs et/ou des diamètres intérieurs constants,
**caractérisé en ce qu'**une deuxième extrémité (36) du ressort (30), orientée à l'opposé de l'allumeur (15), est une extrémité de sortie ouverte.

2. Générateur de gaz (10) selon la revendication 1,
**caractérisé en ce que** le ressort (30) présente trois ou quatre sections de ressort (31, 32, 33) avec des diamètres extérieurs (Q1, Q2, Q3) de tailles différentes, pour lequel chaque section de ressort (31, 32, 33) comprend respectivement plusieurs spires de ressort.

3. Générateur de gaz (10) selon la revendication 1 ou 2,
**caractérisé en ce que**
les diamètres extérieurs (Q1, Q2, Q3) des sections de ressort (31, 32, 33) diminuent en taille d'une première extrémité (37) côté allumeur vers une deuxième extrémité (36) du ressort, et/ou **en ce qu'**une première section de ressort (31) présente le plus grand diamètre extérieur (Q1) à l'extrémité (37) du ressort se trouvant côté allumeur.

4. Générateur de gaz (10) selon l'une des revendications 1 à 3,
**caractérisé en ce que**
une/les première(s) section(s) de ressort (31) à l'extrémité (37) du ressort côté allumeur compense(nt) les tolérances axiales du corps du générateur de gaz (11) et/ou d'un ensemble d'allumage (13).

5. Générateur de gaz (10) selon l'une quelconque des revendications 1 à 4, **caractérisé en ce que**
une première section de ressort (31) est disposée à l'extrémité (37) du ressort côté l'allumeur entre un support d'allumeur ou un boîtier d'allumeur et une paroi de séparation (20) de la chambre de combustion (17).

6. Générateur de gaz (10) selon l'une quelconque des revendications 1 à 5, **caractérisé en ce que**
entre l'extrémité (37) du ressort côté allumeur et la deuxième extrémité (36) du ressort, en particulier dans le sens axial à la suite de la première section de ressort (31), est formée une deuxième section de ressort (32), laquelle présente un diamètre intérieur (QI2) tel que la deuxième section de ressort (32) entoure au moins partiellement l'allumeur (15), en particulier l'étui d'allumeur (16), et peut se déplacer dans le sens axial.

7. Générateur de gaz (10) selon la revendication 6,
**caractérisé en ce que**
la deuxième section de ressort (32) est tellement plus longue dans la direction axiale que l'étui d'allumeur (16) de l'allumeur (15) que, lors de l'activation du générateur de gaz (10), la face frontale (25) d'étui d'allumeur (16) peut être détruite, et/ou, **en ce que** la longueur axiale (LFA) de la deuxième section de ressort est de 1,5 à 3,0 fois, en particulier de 1,8 à 2,5 fois, en particulier de 1,9 à 2,3 fois, la longueur axiale de l'étui d'allumeur (16) de l'allumeur (15).

8. Générateur de gaz (10) selon l'une quelconque des revendications 1 à 7, **caractérisé en ce que**
une troisième section de ressort (33) est formée à la deuxième extrémité (36) du ressort, en particulier à la suite de la deuxième section de ressort (32) dans la direction axiale, laquelle section de ressort peut être déplacée dans la zone non encore enflammée du lit de propergol solide (18) lors de l'activation du générateur de gaz (10) et définit en sa partie intérieure (42) un canal de guidage de gaz pénétrant dans le lit de propergol solide (18), et/ou **en ce que** le lit de propergol solide (18) comprend au moins une pastille fusible thermique, pour lequel la pastille fusible thermique est de préférence disposée dans la zone de l'étui d'allumage (16), en particulier en contact avec une partie du corps extérieur (11) du générateur de gaz.

9. Module airbag avec un générateur de gaz (10) selon l'une des revendications 1 à 8.

10. Système de protection des occupants d'un véhicule avec un générateur de gaz (10) selon l'une des revendications 1 à 8 ou avec un module airbag selon la revendication 9.
